# EUROPÄISCHE PATENTANMELDUNG

(11) **EP 3 357 644 A1**
(43) Veröffentlichungstag der Anmeldung: **08.08.2018**
(21) Anmeldenummer: 18151081.9
(22) Anmeldetag: 10.01.2018
(51) Int. Cl.: B25B 11/00, F03D 13/40, B66C 1/10, B29D 99/00

(54) **VORRICHTUNG ZUM HANDHABEN VON STEGEN SOWIE VERFAHREN ZUM HANDHABEN VON STEGEN FÜR ROTORBLÄTTER**

(30) Priorität: 07.02.2017 DE 102017102368
(71) Anmelder: J. Schmalz GmbH, 72293 Glatten (DE)
(72) Erfinder: Zimmermann, Thomas, 72160 Horb (DE); Hamann, Andreas, 72280 Dornstetten (DE); Rometsch, Jochen, 75382 Althengstett (DE); Klink, Oliver, 72280 Dornstetten (DE)
(74) Vertreter: DREISS Patentanwälte PartG mbB

(57) **Zusammenfassung**

Die Erfindung betrifft eine Vorrichtung (10) zum Handhaben mindestens eines Steges (12), mit einer Traverse (14), und mit wenigstens einer an der Traverse (14) angeordneten Halteeinrichtung (24) zum Fixieren des Steges (12), umfassend wenigstens eine an der Traverse (14) angeordneten Hebevorrichtung (18) zum Anheben des Stegs (12), wenigstens einen Endanschlag (22), welches derart an der Traverse (14) angeordnet ist, dass ein angehobener Steg (12) an dem Endanschlag (22) anliegt, wobei die wenigstens eine Halteeinrichtung (24) derart an der Traverse (14) angeordnet ist, dass ein angehobener Steg (12) fixierbar ist. Die Erfindung betrifft auch ein Verfahren zum Handhaben eines Steges.

## Beschreibung

Die Erfindung betrifft eine Vorrichtung zum Handhaben von Stegen für die Herstellung von Rotorblättern für Windenergieanlagen. Solche Vorrichtungen werden auch als Stegsetzvorrichtungen bezeichnet. Die Erfindung betrifft auch ein Verfahren zur Handhabung der genannten Stege.

Bei der Herstellung von Rotorblättern für Windenergieanlagen müssen verschiedene Bauteile mit vergleichsweise großen Abmessungen zusammengefügt werden. Nach einem bewährten Grundaufbau für Rotorblätter ist mindestens eine Schale vorgesehen, die eine äußere Kontur des Rotorblattes bildet. In die Schale wird üblicherweise wenigstens ein Steg eingesetzt, der sich in Längsrichtung des Rotorblattes erstreckt, vorzugsweise über die gesamte Länge des Rotorblattes. Der Steg stabilisiert und verstärkt die Schalen des Rotorblattes.

Bei der Herstellung von Rotorblättern müssen die Stege in der Regel mit einer definierten Ausrichtung aufgenommen werden und zu ihrer Montage zu dem Rotorblatt verlagert und dort eingesetzt werden. Zur Befestigung muss der Steg in den Schalen des Rotorblattes angepresst werden.

Die Rotorblätter und damit auch die Stege weisen in der Regel große Abmessungen auf, insbesondere Längen von deutlich mehr als zehn Metern. Bei Belastungen in nicht vorhergesehener Weise sind die Stege labil und können leicht beschädigt werden. Dies ist insbesondere deswegen problematisch, da die Stege in der Regel aus sehr leichten Materialien (z.B. Glasfaser, Balsaholz) gefertigt sind und daher eine hohe Empfindlichkeit aufweisen können.

Bekannte Stegsetzvorrichtungen weisen eine ausgestreckte Traverse auf, an welcher wenigstens eine Halteeinrichtung zum Fixieren des Steges angeordnet ist. Eine solche Stegsetzvorrichtung ist beispielsweise in der DE 10 2013 224 392 A1 beschrieben. Zur Handhabung des Steges wird die ausgedehnte Traverse über den Steg positioniert und der Steg mit der Halteeinrichtung an seinen Seitenflächen fixiert. Der Steg muss vor seiner Aufnahme exakt ausgerichtet und positioniert sein. Hierfür kommen in der Regel speziell ausgebildete Positionierrahmen oder Präsentierrahmen zum Einsatz, in welchen der Steg mit definierter Ausrichtung und Positionierung eingesetzt wird und zur Aufnahme mit der Stegsetzvorrichtung vorbereitet wird. Dieser Prozess erfordert mehrere Arbeitsschritte und kann langwierig sein.

Die bekannten Stegsetzvorrichtungen und die zugehörigen Präsentierrahmen sind in der Regel für eine bestimmte Stegform und einen bestimmten Stegtyp gebaut. Der Präsentierrahmen und die Stegsetzvorrichtung müssen spezifisch angepasst sein. Da ein Präsentierrahmen bereitgestellt werden muss, ist die Montage von Rotorblättern mit einem hohen Raumbedarf verbunden.

Die Aufgabe der Erfindung besteht darin, eine zuverlässige, schonende Handhabung von Stegen zu ermöglichen, und die Prozesszeiten bei der Rotorblattherstellung zu verkürzen.

Diese Aufgabe wird durch eine Vorrichtung gemäß Anspruch 1 gelöst, welche eine entlang einer Längserstreckungsrichtung ausgedehnte Traverse aufweist, an welcher wenigstens eine Halteeinrichtung zum Fixieren des Steges angeordnet ist.

An der Traverse ist wenigstens eine Hebevorrichtung angeordnet, mittels welcher der Steg zur Aufnahme mit der Stegsetzvorrichtung in die Richtung zur Traverse hin (Aufnahmerichtung) angehoben wird. Vorzugsweise sind entlang der Traverse mehrere Hebevorrichtungen angeordnet.

Darüber hinaus ist wenigstens ein Endanschlag (vorzugsweise mehrere Endanschläge) vorgesehen, welcher derart ausgebildet ist, dass ein angehobener Steg an dem Endanschlag anliegt und durch die Anlage an dem Endanschlag eine Haltekonfiguration für den angehobenen Steg definiert wird. Wenigstens eine Halteeinrichtung (wiederum: vorzugsweise mehrere Halteeinrichtungen) ist derart an der Traverse angeordnet, dass der angehobene Steg in einer definierten Haltekonfiguration fixiert wird. Die Halteeinrichtung umfasst hierzu z.B. Klammern, mechanische Greifer, Sauggreifer o.ä.

Zum Aufnehmen des Steges wird die Traverse der Vorrichtung entlang ihrer Längserstreckungsrichtung über den langgestreckten Steg positioniert. Mittels der Hebevorrichtung wird dann der Steg zur Traverse hin angehoben bzw. angezogen. Der Steg wird so weit angehoben, bis er an dem Endanschlag anliegt. Insofern kann durch die Anordnung und Ausgestaltung des Endanschlags bzw. der Endanschläge die Haltekonfiguration (Position und Orientierung) des Steges vorgegeben werden. Der so angehobene und ausgerichtete Steg wird dann vorzugsweise mittels der Halteeinrichtung fixiert. Insgesamt ist der Steg dann durch Endanschlag, Hebevorrichtung und Halteeinrichtung in der definierten Haltekonfiguration festgesetzt. Die Komponenten Hebevorrichtung, Endanschlag und Halteeinrichtung wirken daher zur Festlegung der Haltekonfiguration zusammen.

Durch entsprechende Anordnung von Hebevorrichtung, Endanschlag und Halteeinrichtung an der Traverse kann die Stegsetzvorrichtung an verschiedene Stegformen, Stegtypen und Steggrößen angepasst werden. Eine aufwändige Vorpositionierung des Steges in einem Präsentierrahmen ist nicht mehr zwingend erforderlich oder kann mit geringerem Aufwand erfolgen. Der Steg kann grundsätzlich aus verschiedenen Lagen aufgenommen werden. Eine exakte Positionierung kann in der Stegsetzvorrichtung selbst erreicht werden. Insofern können Arbeitsschritte eingespart werden und die Prozesszeiten bei der Herstellung von Rotorblättern verkürzt werden.

Da der Steg in einer definierten Haltekonfiguration insbesondere an den Endanschlägen anliegt, kann der Steg nach seiner Handhabung und Einsetzen in die Rotorblattschale dort direkt angepresst werden, beispielsweise um eine Klebeverbindung herzustellen. Dies kann die Herstellung von Rotorblättern vereinfachen und beschleunigen.

Die Halteeinrichtung wirkt insbesondere auf die Seiten (Breitseiten) des Steges ein. Insofern ist die Halteeinrichtung vorzugsweise derart ausgebildet, dass ein angehobener Steg gegen seitliche Bewegung relativ zur Traverse, insbesondere gegen Bewegung senkrecht sowohl zur Längserstreckungsrichtung als auch zur Aufnahmerichtung fixiert ist. Insofern zieht die Hebevorrichtung den Steg nach oben zur Traverse hin (Aufnahmerichtung) und die Endanschläge blockieren eine weitere Bewegung in Richtung zur Traverse. Die Halteeinrichtung fixiert seitwärts. Dadurch ist die Orientierung und Position in allen Raumrichtungen festgelegt und fixiert. Gegenüber der im Stand der Technik bekannten Fixierung nur mit seitlich wirkenden Haltesaugern wird bei der vorliegenden Erfindung das Problem vermieden, dass der Steg entlang der Saugflächen der Sauger verrutschen kann.

Die Halteeinrichtung und/oder der Endanschlag und/oder die Hebevorrichtung sind vorzugsweise längsverschiebbar und in verschiedenen Positionen entlang der Traverse fixierbar an der Traverse angeordnet. Hierzu ist insbesondere eine Verbindungseinrichtung vorgesehen, welche verschiebbar und in gewünschter Position fixierbar an der Traverse angeordnet ist, wobei die Halteeinrichtung und/oder der Endanschlag und/oder die Hebevorrichtung an der jeweiligen Verbindungseinrichtung angeordnet ist. Durch die Position von Endanschlag und Hebevorrichtung kann eine Anpassung an verschiedene Stegformen, Stegtypen und Steggrößen erreicht werden. Die Positionierung der Hebevorrichtung erlaubt außerdem, die Hebekraft an optimierten Stellen entlang des Stegverlaufs einzuleiten, wodurch eine schonende Behandlung des Steges ermöglicht wird. Die Halteeinrichtungen können bedarfsgerecht an entsprechende Positionen zur Fixierung des Steges in der Haltekonfiguration eingestellt werden.

Besonders vorteilhaft ist, wenn eine Vielzahl von Endanschlägen und mehrere Hebevorrichtungen vorgesehen sind, wobei die Endanschläge und die Hebevorrichtungen an verschiedenen Positionen entlang der Längserstreckungsrichtung der Traverse verteilt angeordnet sind. Dadurch wird der Steg beim Anheben gleichmäßig belastet und eine Beschädigungsgefahr verringert. Vorteilhaft ist, wenn eine Mehrzahl von Halteeinrichtungen vorgesehen ist. Die Halteeinrichtungen sind vorzugsweise an verschiedenen Positionen entlang der Längserstreckungsrichtung angeordnet.

Der wenigstens eine Endanschlag ist vorzugsweise anpassbar ausgestaltet. Insbesondere weist der Endanschlag einen Anlageabschnitt (z.B. Anlageteller) auf, welcher an einem in Bezug auf die Traverse verstellbaren Stößel angeordnet ist, so dass insbesondere ein Abstand des Anlageabschnitts von der Traverse einstellbar ist. Insbesondere wenn mehrere Endanschläge entlang der Traverse vorgesehen sind, können dadurch die Anlageabschnitte an das Höhenprofil des Steges angepasst werden. Dadurch werden Beschädigungen des Steges bei dessen Handhabung weitgehend vermieden. Insbesondere ist es möglich, über die Endanschläge auf den Steg Druck auszuüben, beispielsweise um den Steg in seine Zielkonfiguration einzudrücken.

Der Endanschlag weist vorzugsweise einen Anlageabschnitt auf, welcher gegenüber dem Stößel verkippbar bzw. neigbar angeordnet ist. Dadurch ist der Anlageabschnitt in seiner Orientierung veränderbar und kann an die Kontur des Steges angepasst werden. Beispielsweise kann der Anlageabschnitt mittels eines Kugelgelenks an dem Stößel angeordnet sein.

Jede Halteeinrichtung umfasst vorzugsweise wenigstens ein Haltemittel. Das Haltemittel ist beispielsweise als Sauggreifer ausgebildet, so dass ein schnelles und beschädigungsfreies Ansaugen ermöglicht wird. Vorzugsweise umfasst die Halteeinrichtung jeweils mehrere separate Haltemittel. Dies ermöglicht es, auch bei unebenen Konturen zuverlässig eine Haltekraft auszuüben.

Die Halteeinrichtung umfasst vorzugsweise eine Hauptsaugplatte zum Fixieren des Steges in der Haltekonfiguration und einen zusätzlichen Positioniersauger. Der Positioniersauger ist derart relativ zur Hauptsaugplatte angeordnet, dass bei Fixierung eines Steges zunächst der Positioniersauger auf den Steg einwirkt und den aufgenommenen Steg in Richtung zu der Hauptsaugplatte hin anzieht. Insbesondere sind die Hauptsaugplatte und der Positioniersauger an einem gemeinsamen Halter angeordnet, wobei der Positioniersauger gegenüber der Hauptsaugplatte in diejenige Richtung hervorragt, aus welcher der Steg angesaugt wird. Durch die genannten Ausgestaltungen können Unebenheiten und Toleranzen in der Oberflächenkontur des Steges ausgeglichen werden. Da zunächst ein Ansaugen mit dem Positioniersauger erfolgt, ist es nicht erforderlich, dass eine Bedienperson Kraft aufwenden muss, um die Halteeinrichtung an dem Steg anzulegen.

Die Halteeinrichtung umfasst vorzugsweise einen von der Traverse weg weisenden Haltearm, an welchem wenigstens ein Haltemittel (insbesondere Sauggreifer) angeordnet ist. Die Anpassbarkeit der Vorrichtung kann dadurch weiter erhöht werden, dass das Haltemittel an dem Haltearm längsverschiebbar und in veränderbarer Position entlang des Armes fixierbar angeordnet ist. Das Haltemittel ist vorzugsweise mittels eines verstellbaren Haltefußes an dem genannten Haltearm angeordnet, so dass auch die Position und/oder der Abstand des Haltemittels relativ zu dem Haltearm einstellbar ist. Dies ermöglicht es, verschiedene Stegtypen und Stegformen zuverlässig in der Haltekonfiguration zu fixieren.

Die Hebevorrichtung zum Anheben des Steges in Richtung zur Traverse umfasst vorzugsweise ein an der Traverse angeordnetes Grundteil sowie einen von dem Grundteil ausgehenden Zugstrang. Der Zugstrang ist insbesondere von dem Grundteil einziehbar, um den Steg anzuheben. Hierzu weist das Grundteil vorzugsweise einen entsprechenden Aktor oder eine entsprechende Aufwickeleinrichtung (z.B. Winde) auf. An einem freien Ende des Zugstranges ist insbesondere eine Befestigungseinrichtung zur Befestigung an dem Steg vorgesehen. Der Zugstrang kann beispielsweise als Kette oder Seil ausgebildet sein. Die Befestigungseinrichtung umfasst beispielsweise eine Klammer, welche mit dem Steg und/oder geeigneten Halteabschnitten des Steges in Eingriff gebracht werden kann. Die Befestigungseinrichtung kann auch einen aktiven Greifer umfassen, welcher den Steg festhalten kann. Insofern kann die Hebevorrichtung als Kettenzug oder Seilzug ausgebildet sein. Denkbar ist jedoch auch, dass die Hebevorrichtung einen Hubzylinder zum Anheben des Steges oder andere Aktoren umfasst. Die Befestigungseinrichtung kann auch ein Kontaktteil zur formschlüssigen oder kraftschlüssigen Verbindung mit dem Steg aufweisen, beispielsweise einen Verschraubungsabschnitt für den Steg oder einen Steckabschnitt zur Ausbildung einer Steckverbindung in eine entsprechende Ausnehmung des Steges.

Die Hebevorrichtung umfasst vorzugsweise eine Führungsschiene, welche an der Traverse angeordnet ist. Insbesondere ist ein Laufwagen vorgesehen, der an der Führungsschiene läuft und der das Grundteil der Hebevorrichtung trägt bzw. das Grundteil der Hebevorrichtung bildet. Durch die Verlagerung des Laufwagens kann die Kraft an einem optimalen Punkt in den Steg eingeleitet werden. Die Führungsschiene erstreckt sich insbesondere parallel zur Traverse und ist an dieser befestigt.

Zur weiteren Ausgestaltung kann der wenigstens eine Endanschlag einen Sensor aufweisen, mit dem ein Anliegen des Steges an dem Endanschlag detektiert wird. Vorzugsweise wirkt der Sensor mit der Hebevorrichtung derart zusammen, dass die Hebevorrichtung deaktiviert bzw. fixiert wird, wenn der Steg an dem Endanschlag anliegt.

Die eingangs gestellte Aufgabe wird auch durch ein Verfahren zum Handhaben eines Steges insbesondere bei der Herstellung von Rotorblättern für Windenergieanlagen gelöst. Das Verfahren ist insbesondere dazu ausgebildet, mit einer Vorrichtung der vorstehenden Art durchgeführt zu werden. Hierbei wird eine Traverse in eine Position über den Steg gebracht. Es erfolgt ein Anheben des Steges in eine Aufnahmerichtung zur Traverse hin. Dies erfolgt mittels wenigstens einer an der Traverse angeordneten Hebevorrichtung, wobei die Hebevorrichtung den Steg insbesondere nur so weit anhebt, bis der Steg an wenigstens einem Endanschlag anliegt, der an der Traverse zur Vorgabe einer Haltekonfiguration angeordnet ist. Der so angehobene Steg wird mittels einer Halteeinrichtung in der Haltekonfiguration fixiert.

Das Verfahren wird insbesondere mit den vorstehend zur Vorrichtung erläuterten Merkmalen funktional weiter ausgestaltet. Im Rahmen des Verfahrens kann der Steg mitsamt der Traverse verlagert und/oder ausgerichtet werden. Insbesondere kann der Steg über und in eine Schale für ein Rotorblatt gebracht werden und dort positioniert werden. Darüber hinaus ist es möglich, dass der Steg mittels der Stegsetzvorrichtung in seine Zielkonfiguration in der Rotorblattschale angepresst wird.

Die Erfindung wird im Folgenden anhand der Figuren näher erläutert. Es zeigen:
Figur 1 eine erfindungsgemäße Vorrichtung (Stegsetzvorrichtung) im Einsatz zur Handhabung eines Steges, in perspektivischer Darstellung;
Figur 2 skizzierte Seitenansicht der erfindungsgemäßen Vorrichtung bei Handhabung eines Steges;
Figur 3 Detailansicht der wenigstens einen Hebevorrichtung, in perspektivischer Darstellung;
Figur 4 Detailansicht der Hebevorrichtung;
Figur 5 Detailansicht eines Endanschlages gemäß der Erfindung; und
Figur 6 Detailansicht einer Halteeinrichtung.

In den Figuren sowie in der nachfolgenden Beschreibung sind für identische oder einander entsprechende Merkmale jeweils dieselben Bezugszeichen verwendet.

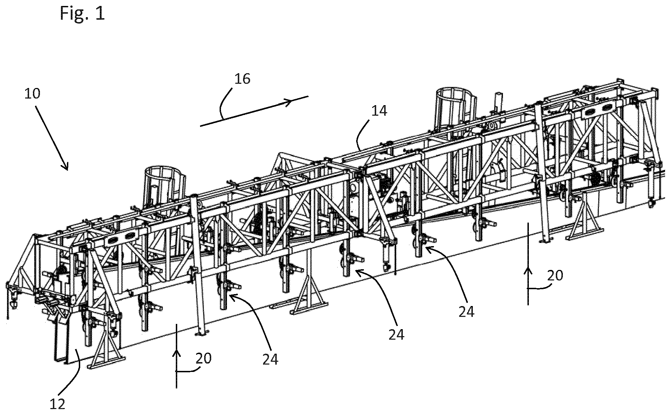

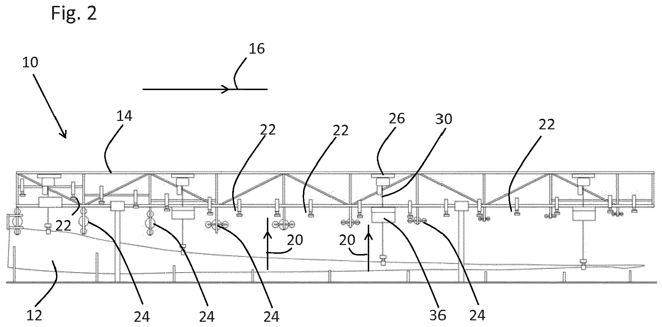

In den Figuren 1 und 2 ist eine Vorrichtung 10 zum Handhaben eines skizzierten Steges 12 dargestellt. Die Vorrichtung 10 kann insgesamt an einen geeigneten Aktor, beispielsweise Hebekran, angebunden werden, um die Vorrichtung 10 samt Steg 12 zu verlagern und die bei der Herstellung von Rotorblättern erforderlichen Handhabungsschritte durchzuführen.

Die Vorrichtung 10 umfasst eine Traverse 14, die entlang einer Längserstreckungsrichtung 16 verläuft. Die Traverse 14 kann beispielsweise als Traggerüst aus profilierten Trägern aufgebaut sein.

An mehreren Positionen entlang der Längserstreckungsrichtung 16 sind Hebevorrichtungen 18 an der Traverse 14 angeordnet. Die Hebevorrichtungen 18 dienen dazu, den Steg 12 in eine Aufnahmerichtung 20 zur Traverse 14 hin anzuheben.

An der Traverse 14 ist außerdem eine Vielzahl von Endanschlägen 22 angeordnet. Die Endanschläge 22 sind an verschiedenen Positionen entlang der Längserstreckungsrichtung 16 verteilt positioniert. Die Endanschläge 22 definieren Endanlage-Positionen für den Steg 12, der mittels der Hebevorrichtungen 18 zur Traverse 14 hin angehoben wird. Dadurch wird eine Haltekonfiguration für den Steg vorgegeben.

An der Traverse 14 sind außerdem mehrere Halteeinrichtungen 24 angeordnet. Die Halteeinrichtungen 24 sind ebenfalls an verschiedenen Positionen entlang der Längserstreckungsrichtung 16 positioniert. Die Halteeinrichtungen 24 dienen dazu, den angehobenen Steg 12 bezüglich seitlicher Bewegungen, also Bewegungen senkrecht zur Längserstreckungsrichtung 16 und senkrecht zur Aufnahmerichtung 20 zu stabilisieren. Insofern wirken die Halteeinrichtungen 24 als laterale Fixierungen.

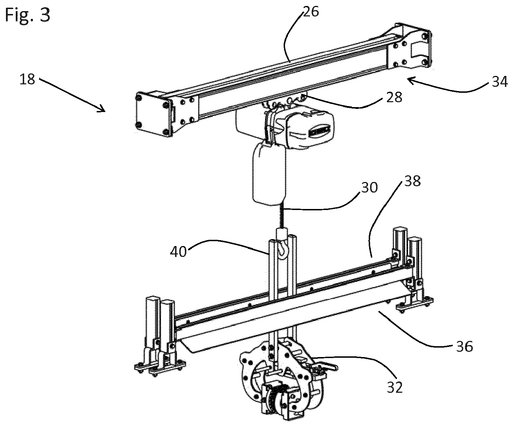

Wie in Figur 3 dargestellt, kann die Hebevorrichtung 18 eine Führungsschiene 26 umfassen, an welcher ein Laufwagen 28 verschiebbar entlang der Führungsschiene 26 angeordnet ist. Die Verschiebung des Laufwagens 28 kann beispielsweise motorisch angetrieben und gesteuert sein. Die Führungsschiene 26 ist vorzugsweise derart an der Traverse 14 angeordnet, dass sie parallel zu der Längserstreckungsrichtung 16 verläuft. Der Laufwagen 28 umfasst vorzugsweise eine Winde für einen Zugstrang 30, an dessen freiem Ende eine Befestigungseinrichtung 32 angeordnet ist.

Die Befestigungsanordnung 32 kann mit dem Steg 12 in Eingriff gebracht werden und der Steg 12 dann durch Einziehen des Zugstranges 30 mit der am Laufwagen 28 angeordneten Winde angehoben werden. Insgesamt sind die Führungsschiene 26 und der Laufwagen 28 Teil eines Grundteils 24 der Hebevorrichtung 18, mittels welcher der Zugstrang 30 einziehbar ist. Aufgrund der Führungsschiene 26 und des Laufwagens 28 ist die Hebevorrichtung 18 über einen gewissen Bereich entlang der Längserstreckungsrichtung 16 verlagerbar und in einer gewünschten Position fixierbar.

Die Hebevorrichtung 18 kann weitere Maßnahmen bereitstellen, dass der Steg 12 beim Anheben in die gewünschte Haltekonfiguration gebracht wird. Beispielsweise kann die Hebevorrichtung eine Längszentrierung 36 aufweisen, die beispielsweise einen sich parallel zur Führungsschiene 26 erstreckenden Zentrierschlitz 38 bereitstellt, durch welchen der Zugstrang 30 und/oder Zentrierstangen 40 der Befestigungseinrichtung 32 verlaufen (Figur 3).

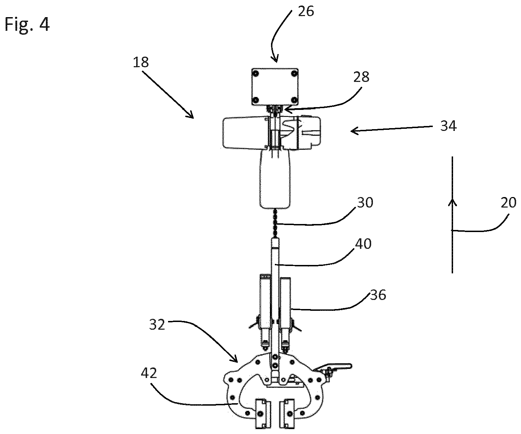

Wie in Figur 4 erkennbar, erstreckt sich vorzugsweise wenigstens eine Zentrierstange 40 von der Befestigungseinrichtung 32 in Aufnahmerichtung 20, d.h. in Richtung des Grundteils 34 der Hebevorrichtung 18. Die Zentrierstange 40 verläuft durch die Längszentrierung 36. Dadurch wird für einen gehaltenen Steg die Position bezüglich der Längserstreckungsrichtung 16 vorgegeben.

Die Befestigungseinrichtung 32 umfasst insbesondere eine Klammer 42, mit welcher der Steg 12 gegriffen werden kann. Die Klammer 42 kann beispielsweise manuell betätigbar sein. Denkbar ist jedoch auch, dass die Klammer 42 über einen Antrieb verfügt, beispielsweise pneumatisch angetrieben ist.

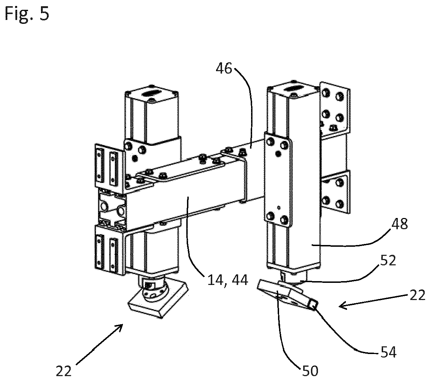

In Figur 5 sind beispielhaft zwei Endanschläge 22 dargestellt, die an einem Profilabschnitt 44 der Traverse 14 angeordnet sind. Hierzu ist insbesondere ein Verbindungselement 46 vorgesehen, welches entlang der Erstreckungsrichtung der Traverse 14 bzw. des Profilabschnitts 44 (insbesondere entlang der Längserstreckungsrichtung 16) verschiebbar und an gewünschter Position fixierbar ist. Beispielsweise weist das Verbindungselement Vorsprünge auf, die in entsprechenden Nuten im Profilabschnitt 44 laufen. Entsprechende Verbindungselemente 46 können auch zur Befestigung der Halteeinrichtung 24 und/oder Hebevorrichtung 18 an der Traverse 14 Verwendung finden.

Der Endanschlag 22 kann einen verstellbaren Stößel 48 und einen hieran angeordneten Anlageabschnitt 50 (z.B. Anlageteller) aufweisen. Insbesondere ist der Stößel 48 derart verschiebbar gehalten, dass der Abstand des Anlageabschnitts 50 von der Traverse 14 einstellbar ist.

Der Anlageabschnitt 50 ist vorzugsweise gelenkig (z.B. über Kugelgelenk 52) mit dem Stößel 48 verbunden. Dadurch ist der Anlageabschnitt 50 verkippbar gegenüber dem Stößel 48. Dies ermöglicht eine Anpassung an die Konturen des Steges 12.

Nach einer vorteilhaften Ausgestaltung weist der Endanschlag 22 einen Sensor 54 auf. Der Sensor 54 kann beispielsweise ein Näherungssensor sein. Vorzugsweise ist der Sensor 54 in dem Anlageabschnitt 50 angeordnet. Dies ermöglicht eine Detektion, ob der Steg 12 an dem Endanschlag 22 (genauer: an dem Anlageabschnitt 50) anliegt. Beispielsweise kann der Sensor 54 mit einer Steuerung der Hebevorrichtung 18 zusammenwirken, so dass der Steg 12 nur so weit entlang der Aufnahmerichtung 20 eingezogen wird, bis er an dem Endanschlag 22 anliegt.

An der Vorrichtung 10, vorzugsweise an der Traverse 14, können auch weitere Sensoren (nicht dargestellt) angeordnet sein, mit welchen die Position und Orientierung des Steges 12 detektiert wird. Diese Sensoren können mit der Hebevorrichtung 18 und/oder der Halteeinrichtung 24 zusammenwirken.

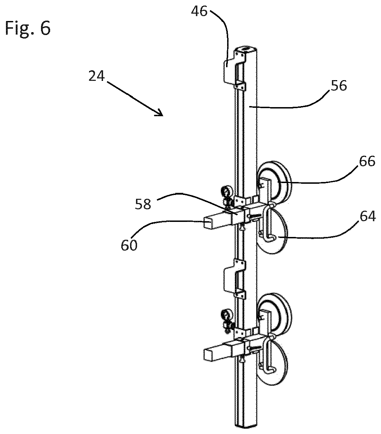

Auch die Halteeinrichtung 24 ist vorzugsweise derart ausgestaltet, dass die flexibel an verschiedene Stegprofile und Stegtypen anpassbar ist. Wie in Figur 6 gezeigt, kann die Halteeinrichtung 24 einen Haltearm 56 aufweisen, der sich vorzugsweise im Wesentlichen senkrecht von der Traverse 14 weg erstreckt. Vorzugsweise ist der Haltearm 56 mittels eines entsprechenden Verbindungselements 46 an der Traverse 14 angeordnet. Dies ermöglicht es, wie oben zu dem Endanschlag 22 beschrieben, dass die Halteeinrichtung 24 an einer gewünschten Position entlang der Traverse 14 angeordnet werden kann.

Nach einer vorteilhaften Ausgestaltung ist an dem Halterahm 56 wenigstens ein Halterungsteil 58 angeordnet. Dieses Halterungsteil 58 kann wiederum derart ausgebildet sein, dass es entlang des Haltearms 56 verschiebbar ist und in einer gewünschten Position fixierbar ist. Beispielsweise kann das Halterungsteil 58 einen Haltefuß 60 für Haltemittel 62 aufweisen, die letztendlich zur Fixierung an dem Steg 12 anliegen. Der Haltefuß 62 ist wiederum vorzugsweise verstellbar an dem Haltearm 56 angeordnet, beispielsweise in Richtung senkrecht zur Erstreckung des Haltearms 56 an dem Halterungsteil 58 verschiebbar und in gewünschter Position fixierbar.

Die Haltemittel 62 können daher in ihrer Höhe bezüglich der Traverse 14 und in ihrem Abstand bezüglich einer Mittellängsebene der Traverse 14 eingestellt werden.

Vorzugsweise umfasst die Halteeinrichtung 24 mehrere separate Haltemittel 62. Vorteilhaft ist insbesondere die Verwendung von Sauggreifern als Haltemittel. Vorzugsweise weist die Halteeinrichtung 24 wenigstens eine Hauptsaugplatte 64 sowie wenigstens einen zusätzlichen Positioniersauger 66 auf. Die Hauptsaugplatte 64 dient dazu, letztendlich die Haltekraft zur Fixierung eines Steges auf den Steg zu übertragen. Der Positioniersauger 66 ist insbesondere derart angeordnet, dass er vor einer Fixierung mit der Hauptsaugplatte 64 zunächst auf den Steg 12 einwirkt und den Steg in Richtung zu der Hauptsaugplatte 64 hin anzieht. Vorzugsweise ist der Positioniersauger 66 als Faltenbalgsauger ausgebildet, welcher gegenüber der Hauptsaugplatte 64 in diejenige Richtung hervorragt, aus welcher der Steg 12 angesaugt werden soll (Figur 6).

## Patentansprüche

1. Vorrichtung (10) zum Handhaben mindestens eines Steges (12) für die Herstellung von Rotorblättern für Windenergieanlagen,
mit einer entlang einer Längserstreckungsrichtung (16) ausgedehnten Traverse (14), und mit wenigstens einer an der Traverse (14) angeordneten Halteeinrichtung (24) zum Fixieren des Steges (12),
**gekennzeichnet durch**:
- wenigstens eine an der Traverse (14) angeordneten Hebevorrichtung (18), welche dazu eingerichtet ist, den Steg (12) zur Aufnahme mit der Vorrichtung (10) in einer Aufnahmerichtung (20) zur Traverse (14) hin anzuheben,
- wenigstens einen Endanschlag (22), welcher derart an der Traverse (14) angeordnet ist, dass ein angehobener Steg (12) an dem Endanschlag (22) anliegt und dadurch eine Haltekonfiguration des angehobenen Steges (12) vorgebbar ist,
wobei die wenigstens eine Halteeinrichtung (24) derart an der Traverse (14) angeordnet ist, dass ein angehobener Steg (12) in der Haltekonfiguration mittels der Halteeinrichtung (24) fixierbar ist.

2. Vorrichtung (10) nach Anspruch 1, wobei die Halteeinrichtung (24) derart ausgebildet ist, dass ein angehobener Steg gegen seitliche Bewegung bezüglich der Traverse (14), insbesondere gegen Bewegung senkrecht zur Längserstreckungsrichtung (16) und zur Aufnahmerichtung (20), fixierbar ist.

3. Vorrichtung (10) nach Anspruch 1 oder 2, wobei die wenigstens eine Halteeinrichtung (24) und/oder der wenigstens eine Endanschlag (22) und/oder die wenigstens eine Hebevorrichtung (18) längsverschiebbar und in veränderbarer Position entlang der Traverse (14) fixierbar an der Traverse (14) angeordnet sind.

4. Vorrichtung (10) nach einem der vorherigen Ansprüche, wobei eine Vielzahl von Endanschlägen (22) und mehrere Hebevorrichtungen (18) vorgesehen sind, wobei die Endanschläge (22) und die Hebevorrichtungen (18) an verschiedenen entlang der Längserstreckungsrichtung (16) der Traverse (14) verteilten Positionen angeordnet sind.

5. Vorrichtung (10) nach einem der vorherigen Ansprüche, wobei der Endanschlag (22) einen Anlageabschnitt (50) zur Anlage an einen angehobenen Steg (12) aufweist, wobei der Anlageabschnitt (50) an einem verstellbaren Stößel (48) derart angeordnet ist, dass ein Abstand des Anlageabschnitts (50) von der Traverse (14) einstellbar ist.

6. Vorrichtung (10) nach Anspruch 5, wobei der Anlageabschnitt (50) gegenüber dem Stößel (48) verkippbar angeordnet ist.

7. Vorrichtung (10) nach einem der vorherigen Ansprüche, wobei die Halteeinrichtung (24) jeweils mehrere separate Haltemittel (62) umfasst.

8. Vorrichtung (10) nach einem der vorherigen Ansprüche, wobei die Halteeinrichtung (24) eine Hauptsaugplatte (64) zum Fixieren des Steges (12) und einen Positioniersauger (66) aufweist, wobei die Hauptsaugplatte (64) und der Positioniersauger (66) derart relativ zueinander angeordnet sind, dass bei Fixierung eines Steges (12) zunächst der Positioniersauger (66) auf den Steg (12) einwirkt und den Steg (12) in Richtung zu der Hauptsaugplatte (64) anzieht.

9. Vorrichtung (10) nach einem der vorherigen Ansprüche, wobei die Halteeinrichtung (24) einen sich von der Traverse (14) weg erstreckenden Haltearm (56) aufweist, an welchem wenigstens ein Haltemittel (62) angeordnet ist.

10. Vorrichtung (10) nach einem der vorherigen Ansprüche, wobei die Hebevorrichtung (18) ein an der Traverse (14) angeordnetes Grundteil (34) und einen Zugstrang (30) aufweist, welcher von dem Grundteil (34) einziehbar ist, wobei an einem freien Ende des Zugstranges (30) eine Befestigungseinrichtung (32) zur Befestigung an dem Steg (12) vorgesehen ist.

11. Vorrichtung (10) nach Anspruch 10, wobei die Hebevorrichtung (18) eine Führungsschiene (26) aufweist, welche an der Traverse (14) angeordnet ist, und wobei ein Laufwagen (28) vorgesehen ist, der entlang der Führungsschiene (26) verlagerbar ist, und wobei das Grundteil (34) der Hebevorrichtung (18) den Laufwagen (28) umfasst.

12. Vorrichtung (10) nach einem der vorherigen Ansprüche, wobei der wenigstens eine Endanschlag (22) einen Sensor (54) aufweist, welcher dazu eingerichtet ist, ein Anliegen des Steges (12) an dem Endanschlag (22) zu detektieren.

13. Verfahren zum Handhaben eines Steges (12) für die Herstellung von Rotorblättern für Windenergieanlagen, umfassend die folgenden Schritte:
- Verbringen einer Traverse (14) in einer Position über den Steg (12);
- Anheben des Steges (12) mit wenigstens einer an der Traverse (14) angeordneten Hebevorrichtung (18), wobei die Hebevorrichtung (18) den Steg (12) nur so weit anhebt, bis der Steg (12) an wenigstens einen an der Traverse (14) angeordneten Endanschlag (22) anliegt zur Vorgabe einer Haltekonfiguration;
- Fixieren des angehobenen Steges (12) mittels einer Halteeinrichtung (24).
